Europäisches Patentamt

European Patent Office

Office européen des brevets

(19)

(11) Publication number: 0 184 270
A2

(12) EUROPEAN PATENT APPLICATION

(21) Application number: 85202092.4

(22) Date of filing: 08.09.82

(51) Int. Cl.⁴: G 02 B 6/38
G 01 D 5/26

(30) Priority: 10.09.81 US 300954
10.09.81 US 300956

(43) Date of publication of application:
11.06.86 Bulletin 86/24

(84) Designated Contracting States:
AT BE CH DE FR GB IT LI LU NL SE

(60) Publication number of the earlier application
in accordance with Art. 76 EPC: 0 074 788

(71) Applicant: THE BOARD OF TRUSTEES OF THE LELAND
STANFORD JUNIOR UNIVERSITY

Stanford, CA 94305(US)

(72) Inventor: Shaw, Herbert John
719 Alvarado Row
Stanford California 94305(US)

(72) Inventor: Digonnet, Michel J.F.
1070 Cloud Avenue
Menlo Park California 94025(US)

(74) Representative: Rushton, Ronald et al,
SOMMERVILLE & RUSHTON 11 Holywell Hill
St. Albans Hertfordshire AL1 1EZ(GB)

(54) Fiber coupler displacement Transducer.

(57) A transducer includes a fiber optic coupler (10) having a variable coupling efficiency. The fiber optic coupler includes a first fiber (12a) and a second fiber (12b) and an interaction region in which light propagating in one of the fibers is transferred to the other fiber by evanescent field coupling such that introducing light into one of the fibers may cause light to be output from both fibers. Detectors (54, 56) detect the light output by the fibers and a ratiometer (58) produces an output proportional to the ratio of light intensity received by one of the detectors to the light intensity received by the other detector, the ratio being indicative of the coupling efficiency of the fiber optic coupler. The coupling efficiency varies in response to the relative position of the fibers, thereby providing a transducer for measuring displacement.

FIG. 5

# FIBER COUPLER DISPLACEMENT TRANSDUCER

## Cross Reference to Related Application

This application is a division of European Application No. 82304704.8-2205 filed September 8, 1982.

## Background of the Invention

This invention relates to transducers used for the measurement of minute displacements, for example, in the range of several microns or less with precise accuracy. The invention also relates to the indirect measurement of other physical parameters, such as temperature and pressure, through the use of a secondary transducer which provides a displacement proportional to the temperature or pressure to be measured. The invention relates to the measurement of such physical parameters with extremely high resolution over a relatively small range, or over a correlated group of dynamic ranges.

The most successful, prior, high resolution displacement transducer known to applicant is a linear variable differential transducer which comprises a transformer having a primary coil and two secondary coils symmetrically spaced on a cylindrical form. A free moving, rod-shaped magnetic core inside the coil assembly provides a path for the magnetic flux linking the coils. When the primary coil is energized by an external source, voltages are induced in the two secondary coils. Typically, these secondary coils are connected as an opposed series circuit so that the two induced voltages are of opposite polarity. Thus, the net output of the transducer is the difference between these two voltages, which is zero when the core is at the center or null position in the transducer. When the core is moved from the null position, the induced voltage in the coil toward which the core is moved increases, while the induced voltage in the opposite coil decreases. Moving the core from the null position produces a differential voltage output which varies linearly with changes in core position.  The sign of the output voltage changes as the core is moved from one side of null to the other.

Such transducers provide isolation between the electrical circuit and the element whose displacement is being measured and offer wide temperature range operation, long mechanical lifetime, and high sensitivity with low drift and linearity over a broad dynamic range.  For example, the sensitivity of such devices provides a minimum measurable displacement as low as 0.02 microns.  Other such devices may have a linear range as high as 10 inches.

While such transducers have low susceptibility to hostile chemical and thermal environments, their electro magnetic nature makes them relatively susceptible to electrical and magnetic interference, so that their use in a hostile electromagnetic environment may be prohibited.  Furthermore, the dynamic range of a particular transducer, once the transducer has been manufactured, is predetermined as a trade-off against high resolution, so that a particular transducer may not be used for a variety of applications.

Further, while the resolution of such transducers is relatively high, certain applications may require measurement of displacements smaller than 0.02 microns and, to date, electromagnetic devices capable of such resolution have not been constructed.

The German patent publication (Offenlegungsschrift No. 28 53 800) published June 26, 1980 (corresponding to the U.S. Patent No. 4,302,071 issued November 24, 1981 to Winzer) is also of interest in connection with this invention.  This publication discloses a slideable, side-to-side fiber optic coupler which uses piezoelectric crystals to change the relative position of the fibers.  On page 7, lines 9-22, the German patent publication also briefly discusses the possibility of using a fiber optic coupler to measure displacement.  However, there is no discussion of how such a displacement measurement device would be implemented.

## Summary of the Invention

The present invention utilizes the sensitivity of a fiber optic coupler to mechanical displacement of its coupler elements to provide an extremely high resolution, non-electromagnetic displacement transducer.

More specifically, applicant has found that the coupling coefficient of single mode fiber optic couplers is predictably variable in response to mutual displacement of the fiber optic elements which make up the coupler, particularly when these elements are moved in a direction perpendicular to the fiber optic longitudinal axis. Furthermore, because in single mode fiber optic couplers, plural orders of coupling are achievable when the core members are closely spaced (a condition known as "over-coupling"), a family of dynamic ranges are possible for a displacement transducer based upon such couplers. Each of the ranges within the family may have a relatively high resolution, so that a single coupler may be used for measurements over different ranges, with different sensitivities, but with each range having a higher resolution than would be possible if the entire range of the family were covered by a single dynamic range.

In a specific configuration for utilizing a fiber optic coupler for displacement measurement, a single mode fiber optic coupler using evanescent field coupling includes a pair of fiber optic elements mounted in a face-to-face configuration within a pair of relatively moveable bases or substrates. One of these substrates is rigidly mounted in a measurement vise, and the second substrate is attached to an element whose movement is to be measured. As the second substrate and an associated fiber optic element are displaced relative to the stationary substrate, the coupling efficiency of the fiber optic

-4-

coupler is altered with a high degree of sensitivity to minute substrate movements.

By supplying light to the coupler input and utilizing photodetector(s) on the primary and secondary coupler outputs, the ratio of light at these outputs may be measured. This ratio may be directly transformed into a measurement of displacement of the moveable fiber optic substrate relative the stationary substrate. Furthermore, by attaching the moveable substrate to an object whose displacement is to be measured, a direct reading of displacement with a high degree of accuracy and repeatability is possible, even in a hostile electromagnetic environment.

The displacement transducer of the present invention may also be used to measure the frequency and amplitude of mechanical vibrations. Moreover, using a secondary transducer, such as a material having known thermal expansion characteristics, the displacement transducer may be used indirectly to measure temperature. Likewise, it has been found that, by using other secondary transducers, such as materials having known compressibilities, the displacement transducer of this invention may be used as a pressure sensor. Other physical properties may likewise be measured, so long as secondary transducers can be found to provide a displacement which varies in accordance with such properties.

These and other advantages of the present invention are best understood through reference to the drawings, in which:

FIGURE 1 is a cross-sectional view of the fiber optic coupler used in the present invention;

FIGURE 2 is a cross-sectional view of the coupler of Figure 1, taken along line 2-2;

FIGURE 3 is a cross-sectional view of the coupler of Figure 1 taken along line 3-3;

FIGURE 4 is a perspective view of one element of the coupler of Figure 1, separated from the other element thereof to show the configuration of the confronting face of said element;

FIGURE 5 is an elevation view of a test assembly including the fiber optic coupler shown in Figure 1, for measuring displacement;

FIGURE 6 is graph showing the theoretical coupling efficiency of a coupler plotted as a function of the horizontal displacement of the optical fibers thereof;

FIGURE 7 is a plot similar to the plot of Figure 8, but showing a second theoretical fiber optic coupling curve for a fiber optic coupler having a core spacing smaller than that shown in Figure 6 to generate a family of dynamic ranges for the displacement transducer;

FIGURE 8 is a schematic diagram of an electrical circuit used for measuring the coupling efficiency of the the coupler within the test assembly of Figure 5 to provide a measurement of displacement; and

FIGURE 9 is a schematic block diagram of an alternative electrical system for use in place of the electrical circuit of Figure 8 for high resolution measurements of displacement.

Detailed Description of the Preferred Embodiment

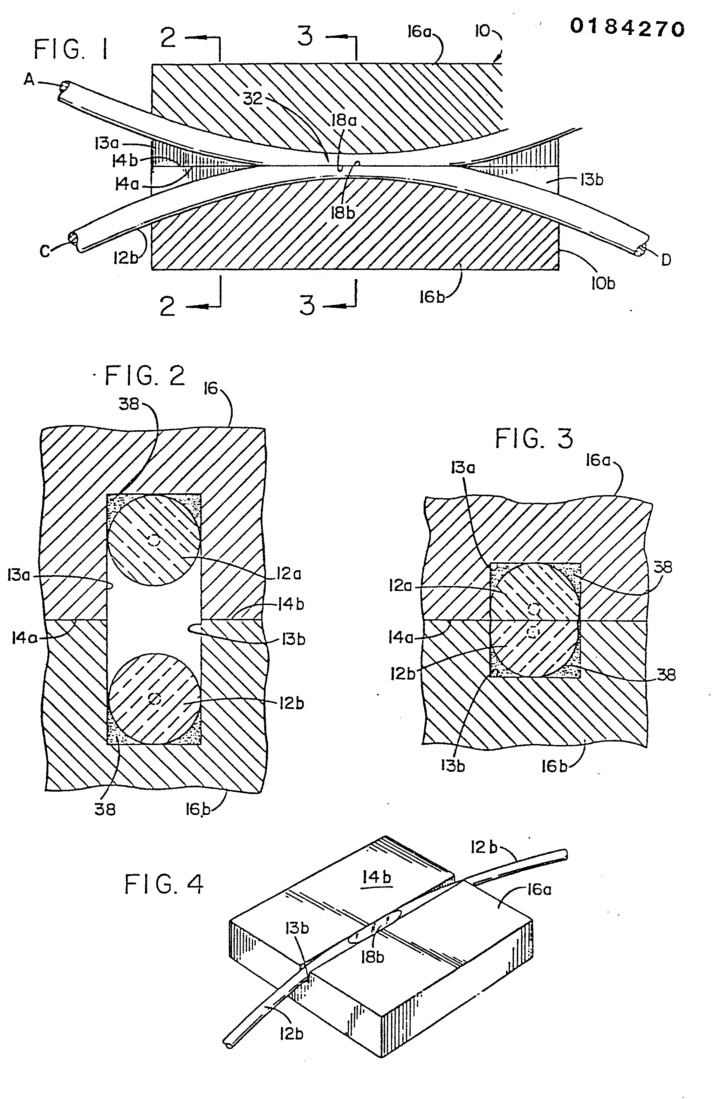

Referring initially to Figures 1 through 4, a fiber optic coupler 10 is shown which provides the transducing element of the displacement transducer 11 of the present invention.

The coupler 10 includes two strands, 12a and 12b, of a single mode fiber optic material mounted in longitudinal arcuate grooves 13a and 13b, respectively, formed in optically flat confronting surfaces 14a and 14b, respectively, of rectangular bases or substrates 16a and 16b, respectively.

Each of the strands 12a and 12b comprises a commercially available fiber of quartz glass which is doped to have a central core and an outer cladding. The applicant has found that the present invention works effectively with single mode fibers, which typically have a core diameter in the order of 10 microns or less and a cladding diameter on the order of 125 microns.

The arcuate grooves 13a and 13b have a radius of curvature which is very large compared to the diameters of the strands 12a and 12b. Thus the fiber optic strands 12a and 12b, when mounted in the grooves 13a and 13b, respectively, gradually converge toward the center and diverge toward the edges of the substrates 16a and 16b. At the centers of the substrates 16a and 16b the depth of the grooves 13a and 13b which mount strands 12a and 12b, respectively is less than the diameter of the strands 12a and 12b. At the edges of the substrates 16a and 16b, the depth of the grooves 13a and 13b is preferably at least as great as the diameter of the strands 12a and 12b. Fiber optic material is removed from each of the strands 12a and 12b to form oval shaped, planar surfaces 18a and 18b, which are coplanar with the confronting surfaces 17a and 17b, respectively, of the substrates 16a and 16b, respectively. In the embodiment shown, the coupler halves 10a and 10b are identical and are assembled by placing the confronting surfaces 14a and 14b of the substrates 16a and 16b together so that the surfaces 18a and 18b of the strands 12a and 12b are in facing relationship. An index matching substance (not shown), such as index matching oil, is provided between the confronting surfaces 14a and 14b. The index matching substance has a refractive index approximately equal to the refractive index of the cladding and also functions to prevent the optically flat surfaces 14a and 14b from becoming permanently locked together.

An interaction region 32 is formed at the junction of the strands 12a and 12b. In the interaction region 32, light is transferred between the strands 12a and 12b by evanescent field coupling. When the spacing between the cores of the strands 12a and 12b is within a critical zone, each strand receives a significant portion of the evanescent field energy from the other strand; and optimum coupling is achieved without significant energy loss. For a single mode fiber having a step index gradient, the critical zone can be quite narrow. In a single mode fiber of the type shown in Figures 1 through 4, for example, the required center-to-center spacing between the strands 12a and 12b at the center of coupler is typically less than a few (for example, 2-3) core diameters.

Preferably the strands 12a and 12b are symmetrical through the interaction region 32 in the plane of the facing surfaces 18a and 18b so that the facing surfaces 18a and 18b are coextensive if superimposed.

The coupler 10 includes four ports labeled A, B, C and D in Figure 1. If it is assumed that input light of a suitable wavelength, for example, 1.15 microns, is applied to port A, this light passes through the coupler 10 and is output at either one or both of port B and port D, depending on the amount of power that is coupled between the strands 12a and 12b. In this regard, the term "normalized coupled power" is defined as the power ratio of the coupled power to the total output power. In the above example, the normalized coupled power would be equal to the ratio of the power at port D to the sum of the power output at ports B and D. This ratio is also referred to as the "coupling efficiency" and when so used is typically expressed as a percent. Thus, when the term "normalized coupled power" is used herein, it should be understood that the corresponding coupling efficiency is equal to the normalized coupled power times 100.

The coupler 10 operates on evanescent field coupling principles in which guided modes of the strands 12a and 12b interact through their evanescent fields to cause light to be transferred between the strands 12a and 12b.

As previously indicated, the transfer of light between the strands 12a and 12b occurs at the interaction region 32. The amount of light transferred is dependent upon the proximity and orientation of the cores of the strands 12a and 12b as well as the effective length of the interaction region 32. If the length of the interaction region 32 and the separation of the strands 12a and 12b within this region 32 are properly selected, light within the coupler 10 will make only one transfer between the strands 12a and 12b as it travels through the interaction region 32. If the coupler 10 is properly constructed, it is possible under such conditions to couple 100% of the light input at port A to port D. If the length of the interaction region 32 is further increased, or the separation between the strands 12a and 12b further reduced, a phenomenon referred to herein as over-coupling will occur in which the light will transfer back to the strand from which it originated. Several orders of over-coupling are possible. Thus, as the interaction length is still further increased or the separation is still further reduced, the light will make several transfers between the strands 12a and 12b. Thus, the light may make multiple transfers back and forth between the two strands 12a and 12b as it travels through the region 32, the number of such transfers being dependent on the length of interaction region 32 and the spacing of the strands 12a and 12b within this region.

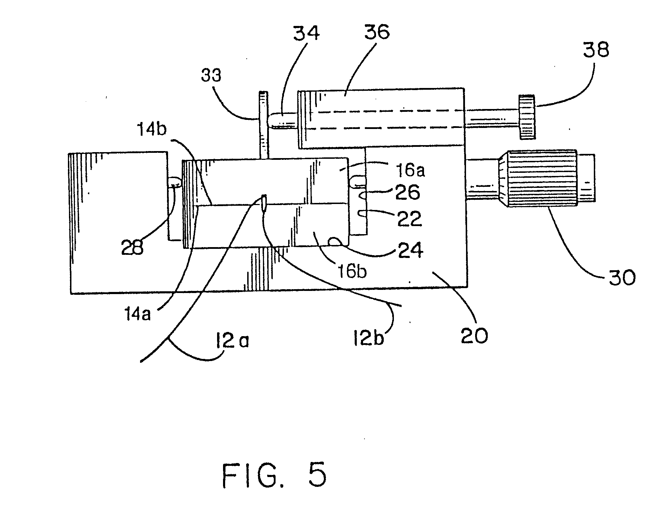

Figure 5 illustrates the incorporation of the fiber optic coupler 10 into a displacement transducer configuration. In this configuration, the substrate 16b is rigidly mounted within a frame or yoke 20 having a stepped, U-shaped channel 22. The lower portion 24 of the channel 22 is narrower than the upper portion 26 and is sized to rigidly mount the lower substrate 16b, with the bottom of substrate 16b resting on the bottom of the channel 22.

The step transition between the upper portion 26 and the lower portion 24 is below the confronting faces 14a and 14b of the coupler 10 so that the upper substrate 16a may be translated in a direction perpendicular to the channel 22 between the sidewalls forming the upper channel portion 26. The coupler 10 is oriented so that the strands 12a and 12b are in a direction parallel to the channel 22 to permit such translation to laterally offset the facing surfaces 18a and 18b (Figure 1).

A cylindrically-shaped retainer 28 is slidably mounted to project from one sidewall of the upper portion 26 of the channel 22. This retainer 28 is spring biased to bear against one side of the substrate 16a. A differential micrometer 30 is mounted on the opposite sidewall of the upper channel portion 26. The differential micrometer 30 bears against the opposite side of substrate 16a so that the substrate 16a and 16b are held between the micrometer 30 and the spring biased retainer 28.

By turning the micrometer 30, the position of the substrate 16a may be adjusted relative to the substrate 16b to provide a home or starting position for the displacement measurement.

The upper substrate 16a mounts a projecting flange 33 which abuts a push rod 34 mounted for reciprocal movement within a guide 36. The push rod 34 may include an enlarged distal end 38 for mounting to an element (not shown) whose displacement is to be measured.

As the push rod 34 is displaced to the left, as viewed in Figure 5, the push rod 34 bears upon the flange 33 and displaces the upper substrate 16a to the left, relative to the substrate 16b, overcoming the bias of the retainer 28 and displacing the substrate 16a away from the micrometer 30. This displacement, in turn, laterally displaces the strands 12a and 12b (Figure 1).

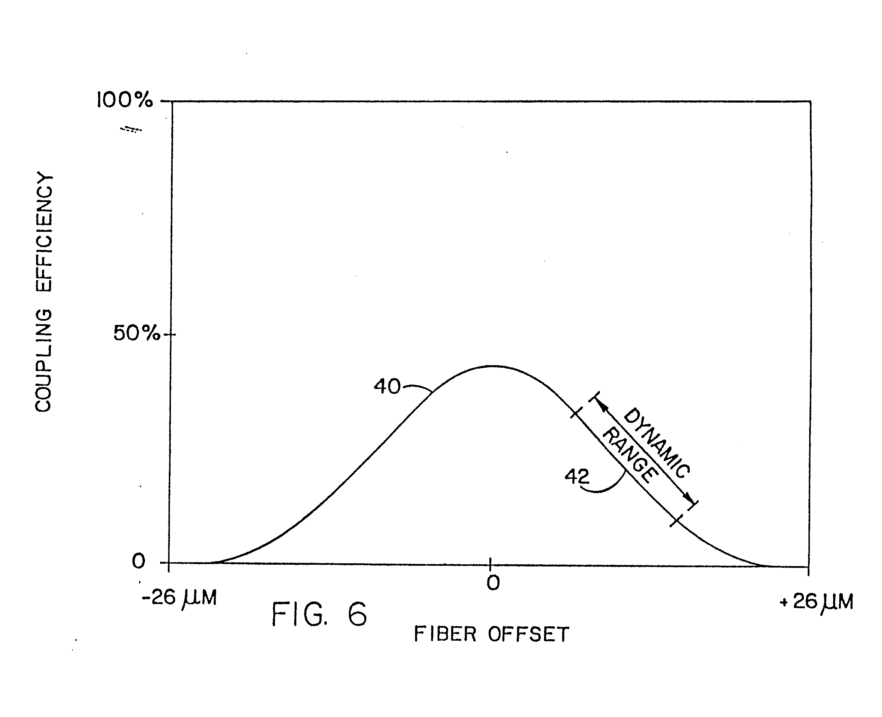

The curve 40 of Figure 6 graphically illustrates the effect of laterally offsetting the fiber facing surfaces

18a and 18b (Figure 1) for a coupler 10 having a minimum core spacing when the surfaces 18a and 18b are superimposed which provides a 50% coupling efficiency. As shown in Figure 6, when the facing surfaces 18a and 18b of the fibers 12a and 12b are laterally offset in either direction from the superimposed configuration to increase the spacing between the strands 12a and 12b, the coupled power gradually decreases to zero. A portion of this gradual increase is substantially linear and is denoted as the "dynamic range" 42 in Figure 6. It will be understood, therefore, that if a coupler 10 having the characteristics shown in Figure 6 is utilized in the system of Figure 5, the micrometer 30 will first be used to adjust the starting location of the upper substrate 16a to a location within the dynamic range 42. For example, the starting position may be at one end of the dynamic range 42 so that pressure on the push rod 34 (Figure 5) can adjust the position of the upper substrate 16a in a direction which utilizes the full dynamic range 42. Alternatively, if measurement of displacement in either direction is desired, the micrometer 30 may be used to adjust the starting position so that it is in the middle of the dynamic range 42. It will be recognized that, as the push rod 34 adjusts the position of the upper substrate 16a so that the coupling efficiency varies between approximately 20% and 40%, as shown in Figure 6, the ratio of light output at ports B and D (Figure 1) will vary linearly in relationship with the displacement of the substrate 16a. Thus, this ratio provides a direct linear measurement of the displacement of substrate 16a.

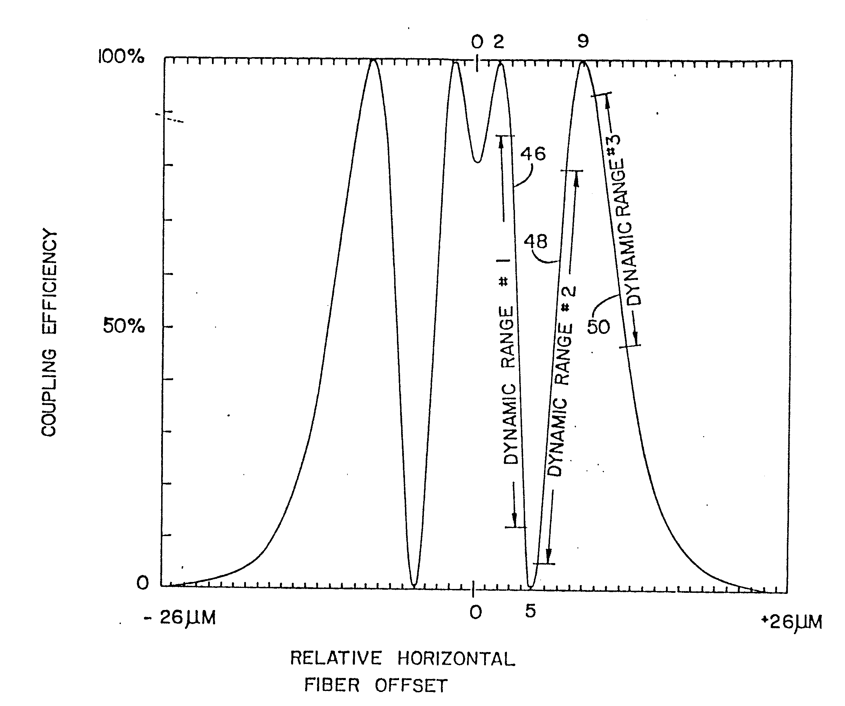

Referring now to Figure 7, the coupling efficiency is plotted versus displacement from zero with surfaces 18a and 18b superimposed for a coupler having a minimum edge to edge core spacing which provides over-coupling. Thus, when the upper substrate 16a (Figure 1) is laterally offset from the lower substrate 16b by 9 microns, 100% coupling occurs. That is, light entering the coupler at port A will exit at port D, with virtually no light exiting at port B. When the strands 12a and 12b are moved closer to one another by displacing the upper substrate 16a toward a directly superimposed position above the substrate 16b, the light which was originally coupled from port A and strand 12a into strand 12b is recoupled into strand 12a. Therefore, at a displacement of 5 microns, the coupling efficiency is zero, all 'of the light having then been coupled back from strand 12b to strand 12a.

As the strands 12a and 12b are moved even closer toward a superimposed position, so that their offset is two microns, 100% coupling efficiency is again achieved. That is, the light is transferred from port A and strand 12a to strand 12b, then back to strand 12a, and finally completely back to strand 12b to exit at port D.

By placing the fiber cores sufficiently close to one another, as by grinding and polishing the cladding of the strands 12a and 12b sufficiently to place the cores very near the surfaces 18a and 18b, respectively, a larger order of over-coupling may be achieved. The over-coupling which graphically is illustrated in Figure 7 will provide three separate dynamic ranges 46, 48 and 50, each being substantially linear, on either side of the null or superimposed position. Each of the dynamic 46, 48, 50 ranges may be used, selectively, for displacement measurements and each dynamic range 46, 48, and 50 will provide a different transfer function or transducer constant.

The dynamic range 46 providing the greatest change in coupling efficiency versus horizontal displacement will provide the most accurate displacement measurements, the highest measurement resolution, but the lowest dynamic range. Conversely, the dynamic range 50 having the lowest slope will provide the widest linear displacement excursion of the three ranges 46, 48, 50, but the lowest resolution. Thus, by utilizing the micrometer 30 (Figure 5) to adjust the coupler 10, a dynamic range 46, 48, 50 may be selected which provides the sensitivity and range required for a particular measurement.

It should be recognized that, in this particular system, the three dynamic ranges 46, 48, 50 provide a linear displacement excursion of about 2, 3, and 4 microns, respectively, with a resolution of approximately 0.005 microns in each range 46, 48, 50.

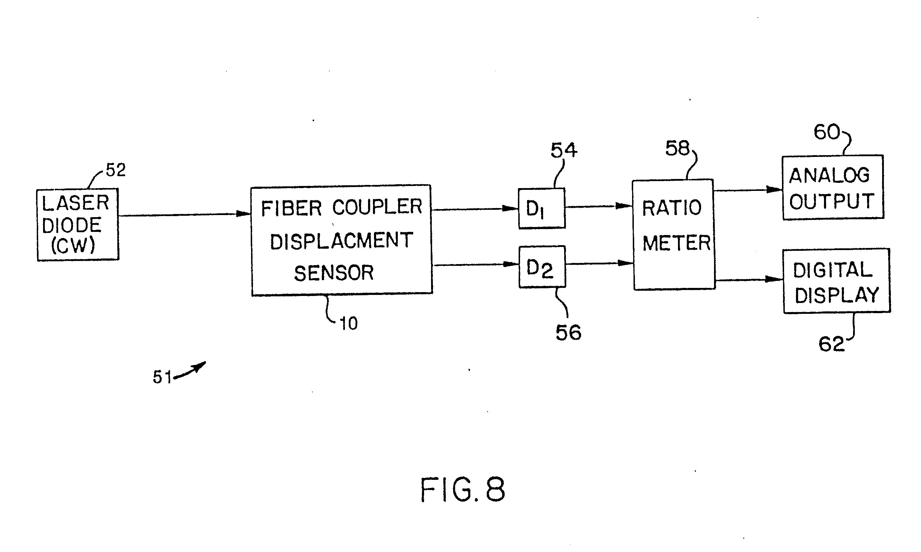

Referring now to Figure 8, an electrical system 51 is shown for measuring the ratio of light output of ports B and D (Figure 1) to provide a measurement of coupling efficiency and to thus generate an electrical signal which is proportional to displacement. In the arrangement shown in Figure 8, a laser diode 52 provides a continuous wave signal to the fiber optic coupler 10 and specifically to port A (Figure 1). The outputs from ports B and D are connected, respectively, to a pair of detectors 54 and 56, each of which provides an output electrical signal proportional to the light intensity at ports B and D, respectively. The electrical signals output from the detectors 54, 56 are supplied to a ratio meter 58, which provides a direct measurement of the ratio between the output light at port D and the output light at both ports B and D. This output is supplied as an analog output 60 for operating other equipment (not shown) and as a digital display 62 for providing a direct display of displacement. It will be understood that the analog output 60 and digital display 62 may include scaling factors or constants selected to provide direct displacement measurement in appropriate measurement units. The ratio meter 58, along with the analog and digital outputs 60 and 62, respectively, is a readily available electronic device well known in the prior art.

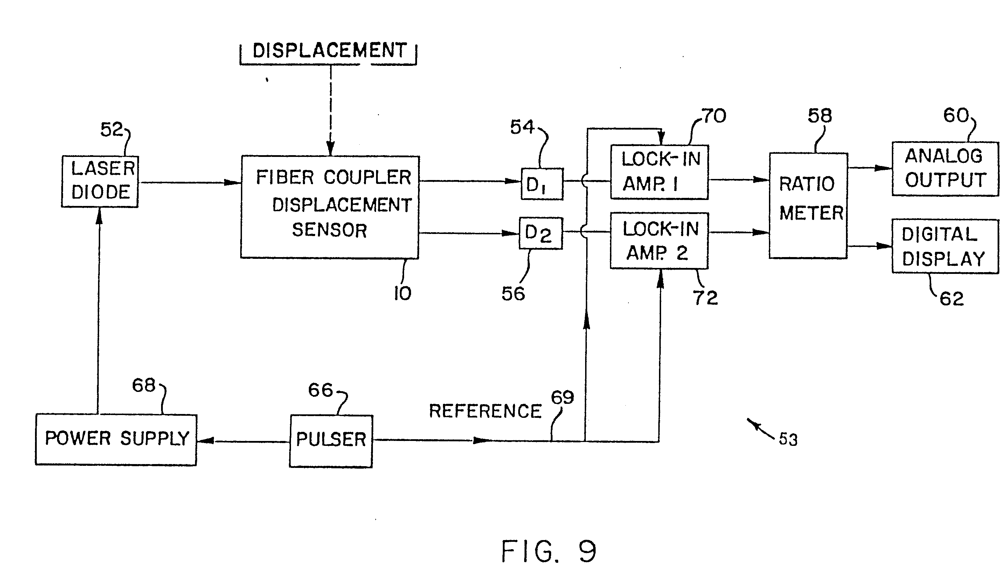

Figure 9 provides a more accurate electronic system 53 for measuring the output signals from detectors 54 and 56, and thus mechanical displacement. In this example, a laser diode 52 supplies light to port A of the fiber optic coupler 10; and the outputs at ports B and D are monitored by detectors 54 and 56 as in Figure 8. However, the laser diode 52 does not supply continuous light as in Figure 8, but rather, provides a pulsed light output, which is induced by a pulse generator 66 controlling a diode power supply 68. In a preferred exemplary embodiment, the pulse generator 66 may provide square wave pulses at a frequency of 2 kHz so that the output from the laser diode 52 is modulated at a 2 kHz rate.

The output from the pulse generator 66 is supplied, in addition, as a reference on line 69 to a pair of lock-in amplifiers 70 and 72, which are connected to the output of the detectors 54 and 56, respectively. The reference input 68 to the amplifiers 70, 72 provides a timing signal for enabling these amplifiers 70, 72. The amplifiers 70, 72 are well known in the prior art and each provides a signal proportional to the average peak value of the output from the detectors 54, 56, respectively. Thus, by using the reference signal on line 69, the lock-in amplifiers 70, 72 will measure the peak output level from the detectors 54, 56 and will average this peak level over a predetermined number of cycles of the pulse generator 66. This number of cycles is adjustable on each of the amplifiers 70, 72.

The output from the amplifiers 70, 72 is supplied to a ratio meter 58 as described in reference to Figure 8 to provide an analog output 60 and digital display 62 corresponding to the displacement of the upper substrate 16a (Figure 1).

By selecting the integration time of the lock-in amplifiers 70, 72, that is, the number of cycles of pulse generator 66 which are averaged by each of the amplifiers 70, 72, the band width of the measurement may be adjusted. For example, an integration time of 1 second corresponds to a measurement bandwidth of 2kHz centered about the pulse generator 76 frequency.  This reduced bandwidth substantially reduces the noise signal contribution in the output to the ratio meter 58, and thereby increases the accuracy of the measurements while reducing the minimum time period between successive measurements to, in this particular example, one second. That is, measurements are available only at a one-second repetition rate.  Thus, by properly adjusting both amplifiers 70, 72 to an integration time which provides only the required measurement repetition rate, the noise bandwidth may be substantially reduced, and the signal-to-noise ratio significantly increased, increasing the accuracy of the measurement.  An operator may thus select a proper tradeoff between measurement accuracy and repetition rate to fit the requirements of a particular measurement.

From the preceding description, it can be seen that the fiber optic coupler provides a non-electromagnetic displacement measurement which is extremely accurate. Further, this single coupler is capable of providing more than one dynamic measurement range, if the coupler is manufactured to provide over-coupling.

-15-

WHAT IS CLAIMED IS:

1. A transducer for measuring displacement including: a first optical fiber (12a) having a first end, and a second optical fiber (12b); a light source for introducing light into said first optical fiber through said first end; said first and second optical fibers juxtaposed to form a fiber optic coupler (10) such that at least a portion of the light conducted by said first optical fiber is transferred to said second optical fiber, each of said fibers having a core surrounded by cladding; said first and second juxtaposed fibers being mounted for relative sliding movement, characterized by:

a device (30) for adjusting the initial position of said first fiber with respect to said second fiber to select a dynamic range to be used for displacement measurement;

apparatus (33, 34, 36, 38) for providing relative sliding movement between said first and second fibers in accordance with the displacement to be measured; and

a device for sensing said relative sliding movement, said sensing device including a detector (54) for detecting light from one of said fibers.

2. A transducer as claimed in Claim 1 further characterized by said sensing device including first and second detectors (54, 56) for detecting light from said first and second fibers respectively and a ratiometer (58) for providing an output in accordance with the ratio of light intensities detected from said fibers.

3. A transducer as claimed in Claim 2 further characterized by apparatus (60, 62) displaying the output of said ratiometer and scaling the output into the desired dimensional units.

4. A transducer according to Claim 2 further characterized in that the fibers are single mode optical fibers.

5. A transducer according to Claims 2 or 4, further characterized by:

a first lock-in amplifier (70) connected between the ratiometer and the first detector to provide to the ratiometer a signal proportional to the average peak value of the light intensity incident upon the first detector;

a second lock-in amplifier (72) connected between the ratiometer and the second detector to provide to the ratiometer a signal proportional to the average peak value of the light intensity incident upon the second detector; and

a pulse generator (66) connected to the first lock-in amplifier and to the second lock-in amplifier to control the time during which the first and second lock-in amplifiers average the output of the first and second detectors to control the bandwidth of the signal output of the ratiometer.

6. A transducer according to Claim 1, further characterized by:

a first substrate (16a) having a groove therein, the first fiber being mounted in the groove;

a second substrate (16b) having a groove therein, the second fiber being mounted in the groove;

a frame (20) having a channel rigidly mounting the second substrate;

a retainer (28) within the channel adjacent the first substrate;

a flange (33) extending from the first substrate; and

a push rod (34) adjacent the flange for displacing the first substrate toward the retainer relative to the second substrate to laterally displace the first fiber relative to the second fiber, thereby varying the coupling efficiency of the coupler in response to a displacement of the push rod.

7. A transducer according to Claim 6, further characterized by a micrometer (30) connected to the frame for adjusting the initial position of the first substrate relative to the second substrate to select a dynamic range of the coupling efficiency.

8. A transducer according to Claim 6 further characterized by said first and second optical fibers being ground to remove a portion of the cladding of said fibers and to provide a planar surface of cladding coplanar with said substrates.

9. A transducer as defined in Claim 1 further characterized in that the transfer of light between said first and second fibers occurs by evanescent coupling.

10. A transducer as claimed in Claim 1 or 4 further characterized in that said first and second fibers are juxtaposed to provide over-coupling and thereby provide a plurality of displacement ranges for said transducer.

11. A transducer as claimed in Claim 9 further characterized in that said first and second fibers are juxtaposed to provide over-coupling and thereby provide a plurality of displacement ranges for said transducer.

12. A transducer as claimed in Claims 10 or 11 further characterized in that the coupling between said fibers varies substantially linearly with said displacement for a plurality of displacement ranges, and that in at least one of said displacement ranges said optical coupling increases as the separation between said fibers increases.

13. A method of measuring the displacement of an object, including: illuminating a first end of a first optical fiber (12a); juxtaposing said first optical fiber (12b) with a second optical fiber to form a coupler, such that at least a portion of the light conducted by said first optical fiber is transferred to said second optical fiber, each of said fibers having a core surrounded by a cladding, characterized by:

positioning said first fiber with respect to said second fiber to select a dynamic range to be used for displacement measurement;

relatively sliding said optical fibers, in accordance with the displacement of the object; and

measuring the light transferred between said two optical fibers to determine the displacement of the object.

14. A method of measuring the displacement of an object, as defined in Claim 13 characterized in that said fibers each have a portion of the cladding removed to form a flat, oval surface, and wherein said sliding step comprises sliding said flat, oval surfaces on said optical fibers to cause relative movement between said fibers.

15. A method of measuring the displacement of an object, as defined in Claim 13 characterized in that said measuring step comprises:

measuring the light output at a second end of said first optical fiber and measuring the light output at the corresponding end of said second optical fiber.

16. A method of measuring the displacement of an object, as defined in Claim 15, further characterized by:

determining the ratio of said measured output at said corresponding end of said second optical fiber to the sum of said measured outputs at both said corresponding end of said second optical fiber and said second end of said first optical fiber.

17. A method of measuring the displacement of an object, as defined in Claim 15, characterized in that said illuminating step comprises providing periodically varying illumination and wherein said light output measuring step comprises measuring the peak output of illumination at said second end of said first optical fiber and said corresponding end of said second optical fiber and integrating said peak output over time to reduce the bandwidth of said measuring step.

18. A method of measuring the displacement of an object, as defined in Claim 13, characterized in that said first and second fibers are juxtaposed to provide over-coupling and thereby provide a plurality of dynamic ranges, said dynamic range selection step comprising selecting a dynamic range from said plurality of dynamic ranges.

FIG. 1

FIG. 2

FIG. 3

FIG. 4

0184270

FIG. 5

FIG. 6

0184270

FIG. 7

FIG.8

FIG. 9